# EUROPEAN PATENT APPLICATION

(11) **EP 4 386 948 A1**
(43) Date of publication of application: **19.06.2024**
(21) Application number: 23746132.2
(22) Date of filing: 17.01.2023
(51) Int. Cl.: H01M 50/147, H01M 50/552, H01M 10/0525

(54) **BATTERY COVER PLATE, BATTERY, AND ENERGY STORAGE DEVICE**

(30) Priority: 29.01.2022 CN 202220245244 U
(71) Applicant: Huawei Digital Power Technologies Co., Ltd., Shenzhen, Guangdong 518043 (CN)
(72) Inventor: YANG, Jixiang, Shenzhen, Guangdong 518043 (CN); JIANG, Xi, Shenzhen, Guangdong 518043 (CN)
(74) Representative: Maiwald GmbH
(86) International application number: PCT/CN2023/072624
(87) International publication number: WO 2023/143250

(57) **Abstract**

Embodiments of this application provide a cell cap, a cell, and an energy storage device. The cell cap includes: a top cover, including a first surface and a second surface that are disposed opposite to each other, and further including a mounting through hole that passes through the first surface and the second surface; and a pole member, including a connection part and a pole part that are integrally disposed, where the connection part is fastened to the first surface, the pole part is disposed on the connection part in a protruding manner, and the pole part is fastened in and passes through the mounting through hole and is exposed from the second surface. A pole and a connection sheet that are conventionally separately disposed are integrated. In this way, parts of the cell cap are reduced, and a structure of the cell cap is simplified. During assembly of a cell, the connection part and the pole part do not need to be connected together through a welding process. This reduces assembly steps of the cell cap, and reduces costs of the cell cap.

## Description

This application claims priority to Chinese Patent Application No. 202220245244.6, filed with the China National Intellectual Property Administration on January 29, 2022 and entitled "CELL CAP, CELL, AND ENERGY STORAGE DEVICE", which is incorporated herein by reference in its entirety.

### TECHNICAL FIELD

This application relates to the field of cell technologies, and in particular, to a cell cap, a cell, and an energy storage device.

### BACKGROUND

Lithium-ion cells are widely used in products such as energy storage base stations, electric vehicles, and consumer electronics due to features of high energy, a long service life, no memory effect, a low self-discharge rate, and environmental friendliness.

A pole in a conventional structure of a cell cap is formed by welding a column and a sheet that are separately disposed. In this case, the cell cap is complicated in assembly and difficult in processing.

### SUMMARY

Embodiments of this application provide a cell cap whose structure can be simplified, a cell, and an energy storage device.

According to a first aspect, this application provides a cell cap, including:
a top cover, including a first surface and a second surface that are disposed opposite to each other, and further including a mounting through hole that passes through the first surface and the second surface; and
a pole member, including a connection part and a pole part that are integrally disposed, where the connection part is fastened to the first surface, the pole part is disposed on the connection part in a protruding manner, and the pole part is fastened in and passes through the mounting through hole and is exposed from the second surface.

According to the cell cap provided in this application, the pole member includes the connection part and the pole part that are integrally disposed, that is, a pole and a connection sheet that are conventionally separately disposed are integrated. In this way, parts of the cell cap are reduced, and a structure of the cell cap is simplified. During assembly of a cell, the connection part and the pole part do not need to be connected together through a welding process. This reduces assembly steps of the cell cap, and reduces costs of the cell cap.

When different structures or parts are assembled, an assembly error occurs. However, according to the cell cap provided in this application, the connection part and the pole part are integrally disposed, and assembly does not need to be performed. This reduces an assembly error of the cell cap, and improves assembly accuracy of the cell cap.

According to the first aspect, in a first possible implementation of the first aspect, the pole member includes a pole piece and a plastic fastener. The connection part and the pole part both are disposed on the pole piece. The plastic fastener is provided with a connection through hole. A first end of the plastic fastener passes through the mounting through hole and is fixedly connected to the top cover. A second end of the plastic fastener is exposed from the second surface. The pole part passes through the connection through hole and is fixedly connected to the plastic fastener. The pole part is fastened to the mounting through hole of the top cover by using the plastic fastener, so that a production difficulty and production costs of the cell cap are reduced, and a weight of the cell cap is reduced. This facilitates lightweight development of the cell cap.

According to the first aspect or the first possible implementation of the first aspect, in a second possible implementation of the first aspect, the pole piece further includes a first rotation stopping part. The first rotation stopping part is disposed on a peripheral surface of the pole part. The plastic fastener further includes a second rotation stopping part disposed on an inner wall of the connection through hole. One of the first rotation stopping part and the second rotation stopping part is a protrusion, and the other of the first rotation stopping part and the second rotation stopping part is a depression. The protrusion is accommodated in the depression and is clamped to the depression.

The first rotation stopping part and the second rotation stopping part are connected in a clamping manner, to reduce a possibility that the pole piece rotates relative to the top cover, so that position stability of the pole piece can be maintained when the pole piece is electrically connected to another device, to improve use reliability of a cell.

According to the first aspect or the first and the second possible implementations of the first aspect, in a third possible implementation of the first aspect, the pole member further includes a sealing ring. The sealing ring passes through the mounting through hole and is sleeved outside the pole part. The sealing ring is sealably connected to a peripheral surface of the pole part. The sealing ring is sealably connected to an inner wall of the mounting through hole. The sealing ring is fixedly connected to the first end of the plastic fastener. In this way, the top cover and the pole piece are sealably connected, to improve sealing performance of the cell cap.

According to the first aspect or the first to the third possible implementations of the first aspect, in a fourth possible implementation of the first aspect, the pole piece further includes a first rotation stopping part. The first rotation stopping part is disposed on the peripheral surface of the pole part. The sealing ring further includes a second rotation stopping part disposed on an inner wall of the sealing ring. One of the first rotation stopping part and the second rotation stopping part is a protrusion, and the other of the first rotation stopping part and the second rotation stopping part is a depression. The protrusion is accommodated in the depression and is clamped to the depression. The first rotation stopping part and the second rotation stopping part are connected in a clamping manner, to reduce a possibility that the pole piece rotates relative to the top cover, so that position stability of the pole piece can be maintained when the pole piece is electrically connected to another device, to improve use reliability of a cell.

According to the first aspect or the first to the fourth possible implementations of the first aspect, in a fifth possible implementation of the first aspect, the sealing ring includes a first sealing part and a second sealing part that are connected. The first sealing part is attached to the first surface. The second sealing part is fastened in and passes through the mounting through hole. The second sealing part is fixedly connected to the first end of the plastic fastener. The first sealing part is attached to the first surface. This can effectively reduce a possibility that the sealing ring moves in an axial direction of the mounting through hole, and therefore improve use reliability of the cell cap.

According to the first aspect or the first to the fifth possible implementations of the first aspect, in a sixth possible implementation of the first aspect, the pole member further includes a reinforcement sheet. The pole part includes a top wall disposed at an end that is of the pole part and that is away from the connection part. The reinforcement sheet is fastened to the top wall. The reinforcement sheet is fastened to the top wall of the pole part, and is configured to reinforce the pole piece, to reduce a possibility that the top wall of the pole part is burnt or damaged due to a high welding temperature when the reinforcement sheet is welded with another device.

According to the first aspect or the first to the sixth possible implementations of the first aspect, in a seventh possible implementation of the first aspect, the reinforcement sheet is accommodated in the connection through hole.

According to the first aspect or the first to the seventh possible implementations of the first aspect, in an eighth possible implementation of the first aspect, an area of the top wall is not greater than an area of the reinforcement sheet, so that the pole part is isolated from the outside of the cell cap, and a possibility that a solder falls on the pole part when the reinforcement sheet is welded with another device is also reduced. In addition, the reinforcement sheet can conduct impact on the pole part to the plastic fastener for dispersion when the pole part is subject to an external force. This helps protect the pole piece and increase a service life of the pole piece.

According to the first aspect or the first to the eighth possible implementations of the first aspect, in a ninth possible implementation of the first aspect, a ring-shaped clamping slot is provided on an inner wall of the connection through hole. The reinforcement sheet is clamped in the ring-shaped clamping slot, to improve connection stability between the reinforcement sheet and the plastic fastener, and reduce a possibility that the reinforcement sheet detaches from the plastic fastener.

According to the first aspect or the first to the ninth possible implementations of the first aspect, in a tenth possible implementation of the first aspect, the mounting through hole includes a first mounting through hole and a second mounting through hole. The pole member includes a first pole member and a second pole member. The first pole member is disposed corresponding to the first mounting through hole. The second pole member is disposed corresponding to the second mounting through hole. A pole piece in the first pole member is made of aluminum. A pole piece in the second pole member is made of copper. Reinforcement sheets in the first pole member and the second pole member both are made of copper.

According to the first aspect or the first to the tenth possible implementations of the first aspect, in an eleventh possible implementation of the first aspect, the cell cap further includes a fastening layer covering the first surface. The fastening layer is provided with a fastening hole corresponding to the mounting through hole. The connection part is fixedly connected to a side that is of the fastening layer and that is away from the first surface. The pole part passes through the fastening hole. The fastening layer is configured to fixedly connect the connection part to the first surface.

According to a second aspect, an embodiment of this application provides a cell, including a housing and the cell cap described above. A top cover is fastened to and covers the housing. A connection part is accommodated in the housing.

In the cell provided in the second aspect, a pole and a connection sheet that are conventionally separately disposed in the cell cap are integrated. In this way, parts of the cell cap are reduced, a structure of the cell cap is simplified, and a structure of the cell is simplified. This facilitates lightweight development of the cell.

According to a third aspect, an embodiment of this application provides an energy storage device, including a plurality of cells connected in series and/or in parallel described above and an energy storage housing. The plurality of cells connected in series and/or in parallel are accommodated in the energy storage housing.

In the energy storage device provided in the third aspect, a pole and a connection sheet that are conventionally separately disposed in the cell cap are integrated. In this way, parts of the cell cap are reduced, a structure of the cell cap is simplified, and a structure of the cell is simplified. This facilitates lightweight development of the cell.

### BRIEF DESCRIPTION OF DRAWINGS

FIG. 1a is a schematic diagram of an application scenario of an energy storage device according to this application;
FIG. 1b is a schematic diagram of a structure of an energy storage device according to an implementation of this application;
FIG. 2 is a schematic diagram of a partial structure of a cell according to an implementation of this application;
FIG. 3a is a sectional view of a cell cap according to an implementation of this application;
FIG. 3b is an enlarged schematic diagram of a partial area of the cell cap shown in FIG. 3 a;
FIG. 4 is a top view of a cell cap from which a reinforcement sheet is removed; and
FIG. 5 is a schematic diagram of assembling a sealing ring and a pole part of a cell cap according to an implementation of this application.

### DESCRIPTION OF EMBODIMENTS

For a pole of a cell cap, a positive pole is used as an example. The positive pole includes an aluminum block, an aluminum column, and an aluminum connection sheet, and is formed by sequentially welding the aluminum block, the aluminum column, and the aluminum connection sheet. A negative pole is formed by welding an aluminum block, a copper column, and a copper connection sheet. This structure is complicated in assembly and difficult in processing, and has high material and processing costs.

Based on this, this application provides a cell cap and a related cell and energy storage device. The cell cap includes: a top cover, including a first surface and a second surface that are disposed opposite to each other, and further including a mounting through hole that passes through the first surface and the second surface; and a pole member, including a connection part and a pole part that are integrally disposed, where the connection part and the first surface are stacked, the pole part is disposed on the connection part in a protruding manner, and the pole part is fastened in and passes through the mounting through hole and is exposed from the second surface.

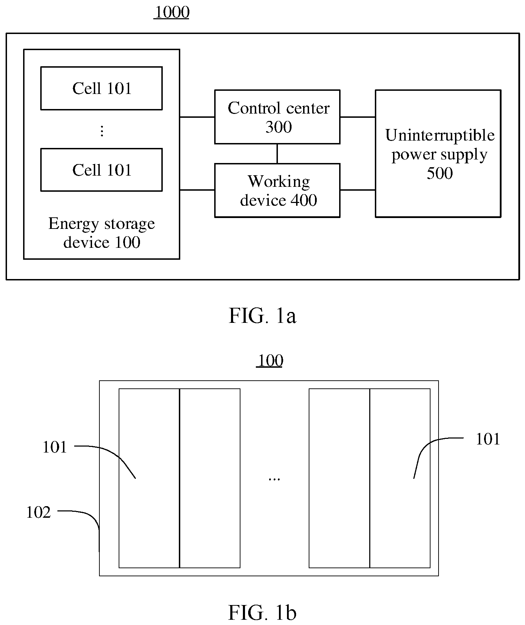

FIG. 1a is an application scenario applicable to an embodiment of this application. This application provides a functional system 1000, including an energy storage device 100, a control center 300, a working device 400, and an uninterruptible power supply 500. In this embodiment, the functional system 1000 is a data center. The control center 300 and the working device 400 are separately electrically connected to the uninterruptible power supply 500. The uninterruptible power supply 500 is configured to supply power to the control center 300 and the working device 400. The energy storage device 100 is electrically connected to the working device 400. As a supplementary energy source of the functional system 1000, the energy storage device 100 supplies power to the working device 400 and the control center 300 when the uninterruptible power supply 500 of the functional system 1000 is faulty or in another case. The energy storage device 100, the working device 400, and the uninterruptible power supply 500 are separately communicatively connected to the control center 300. The control center 300 is configured to control and monitor the working device 400, the energy storage device 100, and the uninterruptible power supply 500. The working device 400 includes a communication device, a lighting device, a data processing device, and the like. This is not limited herein. The uninterruptible power supply (UPS) 500 is configured to distribute power to the energy storage device 100.

Refer to FIG. 1b. The energy storage device 100 includes a plurality of cells 101 that are configured to store electric energy and an energy storage housing 102. The plurality of cells 101 are connected in series and/or in parallel. The plurality of cells 101 are accommodated in the energy storage housing 102. The energy storage device 100 further includes another necessary or non-necessary structure or device, for example, a cooling apparatus. Details are not described herein.

It may be understood that the functional system 1000 is not limited to the data center in this application, and the energy storage device 100 may be further used in another field. For example, the energy storage device 100 may be further used in a base station, an electric vehicle, a power station, and the like. The energy storage device 100 may alternatively be another energy storage device having an energy storage function, for example, a mobile phone, a tablet computer, or a notebook computer. When the energy storage device 100 is a portable device like a mobile phone, a tablet computer, or a notebook computer, the cell 101 of the energy storage device 100 supplies power to a load (for example, a mainboard, a video device, or an audio device) in the energy storage device 100.

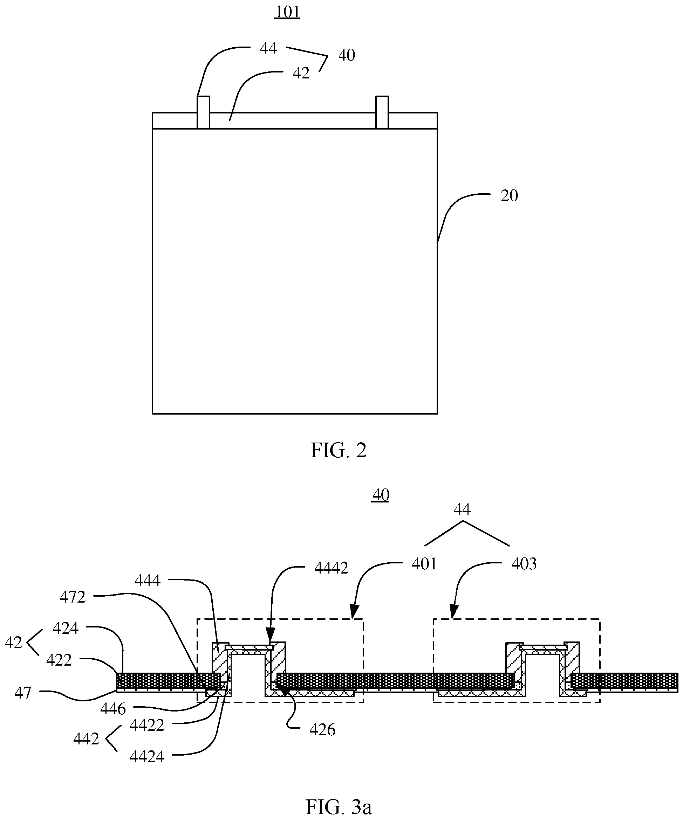

Refer to FIG. 2. A cell 101 includes a housing 20 and a cell cap 40. The cell 101 further includes another necessary or non-necessary structure, for example, a cell. Details are not described herein. The housing 20 is configured to carry a device like the cell.

The cell cap 40 includes a top cover 42 and a pole member 44. The top cover 42 is fastened to and covers the housing 20, and is configured to seal the housing 20. The pole member 44 is configured to be electrically connected to a working device 400, so that the cell 101 supplies power to the working device 400.

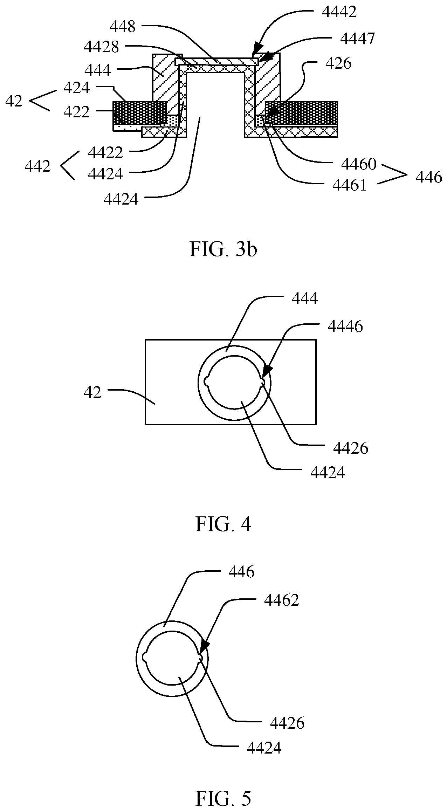

Refer to FIG. 3a and FIG. 3b. Atop cover 42 includes a first surface 422 and a second surface 424 that are disposed opposite to each other. The first surface 422 is disposed facing the inside of a housing 20. The second surface 424 is located on an outermost side of a cell cap 40. The top cover 42 further includes a mounting through hole 426 that passes through the first surface 422 and the second surface 424, and is configured to mount a pole member 44.

The pole member 44 includes a pole piece 442, a plastic fastener 444, and a sealing ring 446. The pole piece 442 passes through the mounting through hole 426. The plastic fastener 444 is sleeved outside the pole piece 442, and is configured to fasten the pole piece 442 to the top cover 42. The sealing ring 446 is sealably connected between the pole piece 442 and an inner wall of the mounting through hole 426.

The pole piece 442 includes a connection part 4422 and a pole part 4424 that are integrally disposed. The connection part 4422 is fastened to the first surface 422. The pole piece 442 may be formed in a manner of stamping or the like. Parameters such as a thickness of the connection part 4422 and a height of the pole part 4424 may be selected based on a required current overload capability. A shape of the connection part 4422 and a shape of the pole part 4424 are not limited in this application. The pole part 4424 is disposed on the connection part 4422 in a protruding manner. The pole part 4424 passes through the mounting through hole 426 and is exposed from the second surface 424.

According to the cell cap 40 provided in this application, the pole piece 442 includes the connection part 4422 and the pole part 4424 that are integrally disposed, that is, a pole and a connection sheet that are conventionally separately disposed are integrated. In this way, parts of the cell cap 40 are reduced, and a structure of the cell cap 40 is simplified. During assembly of a cell 101, the connection part 4422 and the pole part 4424 do not need to be connected together through a welding process. This reduces assembly steps of the cell cap 40, and reduces costs of the cell cap 40. When different structures or parts are assembled, an assembly error occurs. However, according to the cell cap 40 provided in this application, the connection part 4422 and the pole part 4424 are integrally disposed, and assembly does not need to be performed. This reduces an assembly error of the cell cap 40, and improves assembly accuracy of the cell cap 40.

A first end of the plastic fastener 444 passes through the mounting through hole 426 and is fixedly connected to the top cover 42. A second end of the plastic fastener 444 is exposed from the second surface 424. The plastic fastener 444 is provided with a connection through hole 4442. The connection through hole 4442 passes through the first end and the second end of the plastic fastener 444. The pole part 4424 passes through the connection through hole 4442 and is fixedly connected to the plastic fastener 444. In this implementation, the plastic fastener 444 is fixedly connected to the pole part 4424 and the top cover 42 in an injection molding manner. The plastic fastener 444 is made of a material like polypropylene (polypropylene, PP), polyethylene terephthalate (polyethylene terephthalate, PET), or polystyrene sulfide (polyphenylene sulfide, PPS). The pole part 4424 is fastened to the mounting through hole 426 of the top cover 42 by using the plastic fastener 444, so that use of a metal material is reduced, a production difficulty and production costs of the cell cap 40 are reduced, and a weight of the cell cap 40 is reduced. This facilitates lightweight development of the cell cap 40.

Refer to FIG. 4. The pole piece 442 further includes a first rotation stopping part 4426. The first rotation stopping part 4426 is disposed on a peripheral surface of the pole part 4424. The peripheral surface of the pole part 4424 is an outer surface in a circumferential direction of the pole part 4424. The circumferential direction is perpendicular to an axial direction and a radial direction of the pole part 4424. The plastic fastener 444 further includes a second rotation stopping part 4446 disposed on an inner wall of the connection through hole 4442. The first rotation stopping part 4426 and the second rotation stopping part 4446 are connected in a clamping manner, to reduce a possibility that the pole piece 442 rotates relative to the top cover 42, so that the pole piece 442 can remain stable when electrically connected to another device, to improve use reliability of the cell 101.

In this implementation, the first rotation stopping part 4426 extends in the axial direction of the pole part 4424. The first rotation stopping part 4426 includes a protrusion disposed on the peripheral surface of the pole part 4424. The second rotation stopping part 4446 includes a depression provided on the inner wall of the connection through hole 4442. The protrusion is accommodated in the depression.

In another implementation of this application, the first rotation stopping part 4426 is a depression provided on the peripheral surface of the pole part 4424, and the second rotation stopping part 4446 is a protrusion disposed on the inner wall of the connection through hole 4442. In other words, one of the first rotation stopping part 4426 and the second rotation stopping part 4446 is a protrusion, and the other of the first rotation stopping part 4426 and the second rotation stopping part 4446 is a depression. The protrusion is accommodated in the depression and is clamped to the depression. That is, one of the first rotation stopping part 4426 and the second rotation stopping part 4446 is a protrusion, and the other of the first rotation stopping part 4426 and the second rotation stopping part 4446 is a depression. The protrusion is accommodated in the depression and is clamped to the depression.

Refer to FIG. 3a and FIG. 3b again. The sealing ring 446 is accommodated in the mounting through hole 426 and sleeved outside the pole part 4424. The sealing ring 446 is fixedly connected to the first end of the plastic fastener 444. The sealing ring 446 is sealably connected to the inner wall of the mounting through hole 426, and the sealing ring 446 is sealably connected to an outer wall of the pole part 4424, so that the top cover 42 is sealably connected to the pole piece 442, to improve sealing performance of the cell cap 40. An inner wall of the sealing ring 446 is attached to the outer wall of the pole part 4424. An outer wall of the sealing ring 446 is attached to the inner wall of the mounting through hole 426.

In this implementation, the sealing ring 446 includes a first sealing part 4460 and a second sealing part 4461 that are connected. The first sealing part 4460 is attached to the first surface 422. The second sealing part 4461 is fastened in and passes through the mounting through hole 426. The second sealing part 4461 is fixedly connected to the first end of the plastic fastener 444. The first sealing part 4460 is attached to the first surface 422. This can effectively reduce a possibility that the sealing ring 446 moves in an axial direction of the mounting through hole 426, and therefore improve use reliability of the cell cap 40.

The pole part 4424 is in a cylindrical shape. The inside of the pole part 4424 is of a hollow structure. The pole member 44 further includes a reinforcement sheet 448 that is configured to be electrically connected to a device like a working device 400 outside the cell 101. The pole part 4424 includes a top wall 4428 disposed at an end that is of the pole part 4424 and that is away from the connection part 4422. The reinforcement sheet 448 is fastened to the top wall 4428 of the pole part 4424, and is configured to reinforce the pole piece 442. When the reinforcement sheet 448 is welded with another device, the reinforcement sheet 448 is further configured to reduce a possibility that the top wall 4428 of the pole part 4424 is burnt or damaged due to a high welding temperature. The reinforcement sheet 448 may be fastened to the top wall 4428 of the pole part 4424 in a magnetic pulse welding manner or the like. A manner in which the reinforcement sheet 448 is fastened to the pole part 4424 is not limited in this application. In this implementation, the reinforcement sheet 448 is accommodated in the connection through hole 4442, to improve connection stability between the reinforcement sheet 448 and the pole piece 442.

In this implementation, an area of the top wall 4428 is less than an area of the reinforcement sheet 448, so that the pole part 4424 is isolated from the outside of the cell cap 40, and a possibility that a solder falls on the pole part 4424 when the reinforcement sheet 448 is welded with another device is reduced. In addition, the reinforcement sheet 448 can conduct impact on the pole part 4424 to the plastic fastener 444 for dispersion when the pole part 4424 is subject to an external force, for example, when the pole part 4424 is subject to an external force in the axial direction of the pole part 4424 (the axial direction is the same as a direction in which the reinforcement sheet 448 faces the pole part 4424 in FIG. 3b). Because the reinforcement sheet 448 can conduct the impact on the pole part 4424 to the plastic fastener 444, the pole piece 442 is protected, and a service life of the pole piece 442 is increased.

In another implementation of this application, the area of the top wall 4428 may alternatively be equal to the area of the reinforcement sheet 448, that is, the area of the top wall 4428 is not greater than the area of the reinforcement sheet 448, and the reinforcement sheet 448 covers the top wall 4428. In other words, in the axial direction of the pole part 4424, an orthographic projection of the top wall 4428 on a projection plane is located in a region of an orthographic projection of the reinforcement sheet 448 on the projection plane, and the projection plane is perpendicular to the axial direction of the pole part 4424.

In another implementation of this application, the area of the top wall 4428 may alternatively be greater than the area of the reinforcement sheet 448, provided that the reinforcement sheet 448 can reinforce the pole part 4424.

A ring-shaped clamping slot 4447 is provided on the inner wall of the connection through hole 4442, and the reinforcement sheet 448 is clamped in the ring-shaped clamping slot 4447, to improve connection stability between the reinforcement sheet 448 and the plastic fastener 444, and reduce a possibility that the reinforcement sheet 448 detaches from the plastic fastener 444.

In another implementation of this application, the pole part 4424 may be in another shape, for example, a square column. The inside of the pole part 4424 may alternatively be solid.

In this implementation, the mounting through hole 426 includes a first mounting through hole and a second mounting through hole. The pole member 44 includes a first pole member 401 and a second pole member 403. The first pole member 401 is disposed corresponding to the first mounting through hole. The second pole member 403 is disposed corresponding to the second mounting through hole. The first pole member 401 may be used as a positive pole, and the second pole member 403 may be used as a negative pole. A pole piece 442 in the first pole member 401 is made of aluminum. A pole piece 442 in the second pole member 403 is made of copper. Reinforcement sheets 448 in the first pole member 401 and the second pole member 403 both are made of aluminum. The pole piece 442 of the second pole member 403 is made of copper, and the reinforcement sheet 448 is made of aluminum. When reinforcing the pole piece 442 of the second pole member 403, the reinforcement sheet 448 can effectively protect the pole piece 442 of the second pole member 403 from corrosion of an environment outside the cell cap 40. In another implementation of this application, the first pole member 401 may be used as a negative pole, and the second pole member 403 may be used as a positive pole. In another implementation of this application, a material of the pole piece 442 in the first pole member 401 is not limited to aluminum, a material of the pole piece 442 in the second pole member 403 is not limited to copper, and the material of the pole piece 442 in the first pole member 401 may be the same as or different from the material of the pole piece 442 in the second pole member 403.

The cell cap 40 further includes a fastening layer 47 that is configured to fixedly connect the connection part 4422 to the first surface 422. The fastening layer 47 covers the first surface 422. Corresponding to the mounting through hole 426, the fastening layer 47 is provided with a fastening hole 472 that passes through the fastening layer 47. The pole part 4424 passes through the fastening hole 472. The fastening layer 47 is located between the first surface 422 and the connection part 4422. The fastening layer 47 is fixedly connected to the first surface 422. The fastening layer 47 is fixedly connected to the connection part 4422. In this implementation, the fastening layer 47 is a plastic layer, and the fastening layer 47 may be formed between the first surface 422 and the connection part 4422 through an injection molding process. During injection molding, a plastic material is placed between the connection part 4422 and the first surface 422. After injection molding is completed, the plastic material forms the fastening layer 47. The fastening layer 47 may be mounted on the first surface 422 by buckling, bonding, or the like. A material of the fastening layer 47 includes polypropylene (Polypropylene, PP), polyethylene terephthalate (Polyethylene terephthalate, PET), or the like.

In another implementation of this application, the second rotation stopping part 4446 on the plastic fastener 444 may be omitted. Refer to FIG. 5. The sealing ring 446 further includes a second rotation stopping part 4462 disposed on the inner wall of the sealing ring 446. One of the first rotation stopping part 4426 on the pole part 4424 and the second rotation stopping part 4462 on the sealing ring 446 is a protrusion, and the other of the first rotation stopping part 4426 and the second rotation stopping part 4462 is a depression. The protrusion is accommodated in the depression and is clamped to the depression.

In another implementation of this application, a second rotation stopping part is disposed on each of the plastic fastener 444 and the sealing ring 446.

In another implementation of this application, the plastic fastener 444 may be omitted, and the pole piece 442 is directly fastened to the top cover 42 in another manner, for example, in a riveting manner. A manner in which the pole piece 442 is fastened to the top cover 42 is not limited in this application.

Expressions such as "include" and "may include" that may be used in this application indicate existence of the disclosed function, operation, or constituent element, and do not limit one or more additional functions, operations, and constituent elements. In this application, terms such as "include" and/or "have" may be construed as indicating a specific characteristic, quantity, operation, constituent element, or component, or a combination thereof, but cannot be construed as excluding existence or a possibility of addition of one or more other characteristics, quantities, operations, constituent elements, or components, or combinations thereof.

In addition, in this application, the expression "and/or" includes any and all combinations of words listed in association. For example, the expression "A and/or B" may include A, may include B, or may include both A and B.

In this application, expressions including ordinal numbers such as "first" and "second" may modify elements. However, such elements are not limited by the expressions. For example, the expressions do not limit the order and/or importance of the elements. The expression is used only to distinguish one element from another. For example, first user equipment and second user equipment indicate different user equipment, although both the first user equipment and the second user equipment are user equipment. Similarly, without departing from the scope of this application, a first element may be referred to as a second element, and similarly, a second element may also be referred to as a first element.

When a component "connects" or "connects to" another component, the component not only directly connects or connects to the another component, but there may be another component between the component and the another component. In addition, when a component "directly connects" or "directly connects to" another component, there is no component between the components.

The foregoing descriptions are only specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell cap, comprising:
a top cover, comprising a first surface and a second surface that are disposed opposite to each other, and further comprising a mounting through hole that passes through the first surface and the second surface; and
a pole member, comprising a connection part and a pole part that are integrally disposed, wherein the connection part is fastened to the first surface, the pole part is disposed on the connection part in a protruding manner, and the pole part is fastened in and passes through the mounting through hole and is exposed from the second surface.

2. The cell cap according to claim 1, wherein the pole member comprises a pole piece and a plastic fastener, the connection part and the pole part both are disposed on the pole piece, the plastic fastener is provided with a connection through hole, a first end of the plastic fastener passes through the mounting through hole and is fixedly connected to the top cover, a second end of the plastic fastener is exposed from the second surface, and the pole part passes through the connection through hole and is fixedly connected to the plastic fastener.

3. The cell cap according to claim 2, wherein the pole piece further comprises a first rotation stopping part, and the first rotation stopping part is disposed on a peripheral surface of the pole part; the plastic fastener further comprises a second rotation stopping part disposed on an inner wall of the connection through hole; one of the first rotation stopping part and the second rotation stopping part is a protrusion, and the other is a depression; and the protrusion is accommodated in the depression and is clamped to the depression.

4. The cell cap according to claim 2, wherein the pole member further comprises a sealing ring, the sealing ring passes through the mounting through hole and is sleeved outside the pole part, the sealing ring is sealably connected to a peripheral surface of the pole part, the sealing ring is sealably connected to an inner wall of the mounting through hole, and the sealing ring is fixedly connected to the first end of the plastic fastener.

5. The cell cap according to claim 4, wherein the pole piece further comprises a first rotation stopping part, and the first rotation stopping part is disposed on the peripheral surface of the pole part; the sealing ring further comprises a second rotation stopping part disposed on an inner wall of the sealing ring; one of the first rotation stopping part and the second rotation stopping part is a protrusion, and the other is a depression; and the protrusion is accommodated in the depression and is clamped to the depression.

6. The cell cap according to claim 4, wherein the sealing ring comprises a first sealing part and a second sealing part that are connected, the first sealing part is attached to the first surface, the second sealing part is fastened in and passes through the mounting through hole, and the second sealing part is fixedly connected to the first end of the plastic fastener.

7. The cell cap according to claim 2, wherein the pole member further comprises a reinforcement sheet, the pole part comprises a top wall disposed at an end that is of the pole part and that is away from the connection part, and the reinforcement sheet is fastened to the top wall.

8. The cell cap according to claim 7, wherein the reinforcement sheet is accommodated in the connection through hole.

9. The cell cap according to claim 8, wherein an area of the top wall is not greater than an area of the reinforcement sheet.

10. The cell cap according to claim 8, wherein a ring-shaped clamping slot is provided on an inner wall of the connection through hole, and the reinforcement sheet is clamped in the ring-shaped clamping slot.

11. The cell cap according to claim 9, wherein the mounting through hole comprises a first mounting through hole and a second mounting through hole, the pole member comprises a first pole member and a second pole member, the first pole member is disposed corresponding to the first mounting through hole, the second pole member is disposed corresponding to the second mounting through hole, a pole piece in the first pole member is made of aluminum, a pole piece in the second pole member is made of copper, and reinforcement sheets in the first pole member and the second pole member both are made of copper.

12. The cell cap according to any one of claims 1 to 11, wherein the cell cap further comprises a fastening layer covering the first surface, the fastening layer is provided with a fastening hole corresponding to the mounting through hole, the connection part is fixedly connected to a side that is of the fastening layer and that is away from the first surface, and the pole part passes through the fastening hole.

13. A cell, comprising a housing and the cell cap according to any one of claims 1 to 12, wherein a top cover is fastened to and covers the housing, and a connection part is accommodated in the housing.

14. An energy storage device, comprising an energy storage housing and a plurality of cells connected in series and/or in parallel according to claim 13, wherein the plurality of cells connected in series and/or in parallel are accommodated in the energy storage housing.
